# EUROPÄISCHE PATENTANMELDUNG

(11) **EP 3 954 213 A1**
(43) Veröffentlichungstag der Anmeldung: **16.02.2022**
(21) Anmeldenummer: 20190191.5
(22) Anmeldetag: 10.08.2020
(51) Int. Cl.: A01N 55/10, A01P 1/00

(54) **VERWENDUNG VON HÄRTBAREN ZUSAMMENSETZUNGEN AUF BASIS VON POLYSILOXANEN**

(71) Anmelder: Evonik Operations GmbH, 45128 Essen (DE)
(72) Erfinder: ROLAND, Katrin, 45257 Essen (DE); FOTH, Julia, 47495 Rheinberg (DE); GENILKE, Laura, 45147 Essen (DE); SCHULTE, Simone, 45133 Essen (DE); JANKE, Christina, 45327 Essen (DE)
(74) Vertreter: Evonik Patent Association

(57) **Zusammenfassung**

Die Erfindung betrifft die Verwendung von härtbaren Zusammensetzungen enthaltend als
- Komponente A mindestens ein Polysiloxan,
- Komponente B mindestens einen silylgruppentragenden Polyether und/oder Umsetzungsprodukte eines silylgruppentragenden Polyethers mit einer oder mehreren isocyanathaltigen Verbindungen,
- Komponente C mindestens ein Katalysator und
- Komponente D mindestens eine epoxyfunktionelle Verbindung und/oder eine aminofunktionelle Verbindung
in Formulierungen für mit Nutzwasser in Berührung kommenden Bauteilbeschichtungen in Verdunstungskühlanlagen, Kühltürmen und/oder Nassabscheidern.

## Beschreibung

Diese Erfindung betrifft die Verwendung von härtbaren Zusammensetzungen in Formulierungen für mit Nutzwasser in Berührung kommenden Bauteilbeschichtungen in Verdunstungskühlanlagen, Kühltürmen und/oder Nassabscheidern.

Verdunstungskühlanlagen und Kühltürme werden eingesetzt, um Wärmelasten, z. B. aus technischen Prozessen, an die Umgebung abzuführen. Es handelt sich hierbei um Kühlsysteme, in denen der Kühleffekt durch die Verdunstung von Wasser genutzt wird. Dazu wird Wasser in einen Luftstrom geleitet, was zu einer Aerosolbildung führen kann. Trotz des Einsatzes von Tropfenabscheidern können Wassertröpfchen von der Abluft mitgerissen werden und in die Umgebung gelangen.

In solchen Kühlsystemen und auch Nassabscheidern herrschen günstige Vermehrungsbedingungen für Mikroorganismen (z.B. Bakterien, Algen, Schimmelpilze, Protozoen), wie beispielsweise Feuchte, Nährstoffangebot, Temperatur und Licht. Unter den Mikroorganismen können auch Krankheitserreger, wie etwa Legionellen, sich vermehren und durch die mitgerissenen Wassertröpfchen in die Umwelt gelangen. Diese stellen ein gesundheitliches Risiko dar, da sie im Fall des Einatmens Ursache für Infektionskrankheiten sein können. Hochrechnungen ergaben, dass in Deutschland mit etwa 15 000 bis 30 000 ambulant erworbenen Legionellenpneumonien pro Jahr gerechnet werden muss, die zum Teil durch Verdunstungskühlanlagen entstanden sein können.

Bei der Vermehrung und der Verbreitung von Mikroorganismen, insbesondere von Legionellen, spielen Biofilme auf den Oberflächen von Bauteilen von Verdunstungskühlanlagen eine zentrale Rolle. Vor allem bilden sie sich auf den wasserbenetzten Oberflächen von Rohrleitungen, Wärmeüberträgern, Füllkörpern und Tropfenabscheidern.

Ein gängiger Ansatz, um eine Verkeimung von Kühltürmen zurückzudrängen, ist der Einsatz von Bioziden. Jedoch unterliegt die Verwendung von Bioziden strengen gesetzlichen Vorgaben. So dürfen z.B. nur Personen, die im Umgang mit dem jeweiligen Biozid geschult und unterwiesen sind, damit arbeiten.

Biofilme bestehen zu ungefähr 95 % aus Wasser. Der größte Teil der Trockensubstanz besteht aus extra-zellulären polymeren Substanzen. Zusätzlich können Biofilme organische und anorganische Partikel enthalten. Das Wachstum der Biofilme wird durch mineralische Ablagerungen, Schmutz, Schlammablagerungen und Korrosionsprodukte begünstigt.

Etwa 90 % aller Bakterien in Wasser leben im Biofilm, da sie hierdurch Vorteile, z. B. die Anreicherung von Nährstoffen, die Bildung von Lebensgemeinschaften (Biodiversität, Symbiose) erhalten.

Neben der hygienischen Bedeutung können Biofilme auch einen negativen Einfluss auf den Betrieb der Kühlanlage haben, wie z. B. können sie zu Störungen des Wärmeübergangs, zu Ablagerungen in Regelarmaturen und Messzellen führen und die Korrosion fördern.

Deshalb wäre eine Verzögerung oder sogar Verhinderung der Biofilmbildung in Verdunstungskühlanlagen sowohl aus hygienischer als auch aus betriebstechnischer Sicht von großem Vorteil. Wünschenswert wäre auch, den Kühleffekt zu erhöhen.

Verdunstungskühlanlagen und Kühlanlagen werden hier als Synonyme verwendet.

Dem Fachmann ist die härtbare Zusammensetzung auf Basis von Polysiloxanen aus der EP 3 461 864 bekannt, mit der die Oberflächen von Schiffsrümpfen, Bojen, Fischnetzen, off-shore-Bohranlagen, die dem Meerwasser ausgesetzt sind, beschichtet werden, um das Antifouling bzw. Bio-fouling, nämlich das Anhaften und das Wachstum von Organismen, wie z.B. Seepocken (Balanidae), Muscheln (Bivalvia), Seescheiden (Ascidia), Moostierchen (Bryozoa), Schwämme (Porifera), Polypentierchen (Hydrozoa), Seeanemonen (Actinaria), Kalkröhrenwürmer (Serpulidae), Posthörnchenwürmer, Flohkrebse (Amphipoda), Schiffsbohrmuscheln (Tredinidae), Grünalgen, Tang, Ulva, Braunalgen, Rotalgen, zu reduzieren. Hierbei wird angenommen, dass die Substratoberfläche (Schiffsrümpfe, Bojen, Fischnetze etc.) durch die Bildung eines Hydrogels "maskiert" wird und die Organismen diese nicht als Oberfläche wahrnehmen.

Überraschenderweise wurde gefunden, dass die Verwendung von härtbaren Zusammensetzungen gemäß der EP 3 461 864 enthaltend als
- Komponente A mindestens ein Polysiloxan,
- Komponente B mindestens einen silylgruppentragenden Polyether und/oder Umsetzungsprodukte eines silylgruppentragenden Polyethers mit einer oder mehreren isocyanathaltigen Verbindungen,
- Komponente C mindestens ein Katalysator und
- Komponente D mindestens eine epoxyfunktionelle Verbindung und/oder eine aminofunktionelle Verbindung
in Formulierungen für mit Nutzwasser in Berührung kommenden Bauteilbeschichtungen in Verdunstungskühlanlagen, Kühltürmen und/oder Nassabscheidern sich hervorragend eignet.

Zum einen können die erfindungsgemäßen beschichteten Bauteile die Bildung von Biofilmen reduzieren und zum anderen, was zudem völlig überraschend war, die Verweildauer des Nutzwassers auf solchen Bauteilen verlängern, um den Kühleffekt zu optimieren.

Nutzwasser im Sinne dieser Erfindung ist das Wasser, das in einer Verdunstungskühlanlage zum Zweck der Wärmeabfuhr umläuft und im Kontakt mit der Atmosphäre steht.

Bauteile von Verdunstungskühlanlagen, Kühltürmen und/oder Nassabscheidern, die mit dem Nutzwasser in Kontakt kommen, sind beispielsweise Mess- und Regelorgane, Filter, Wärmeübertrager, Füllkörper, Sprühdüsen, Tropfenabscheider, Rohrleitungen und Kühlturmtassen. Die Materialien dieser Bauteile können Metalle wie z.B. nicht rostender Stahl, unlegierter Stahl, niedrig legierter Stahl, Aluminium und/oder Kupfer oder Kunststoffe wie z.B. Polyethylen (PE), Polyvinylchlorid (PVC) und/oder Polypropylen (PP) sein.

Es wird angenommen, dass die Reduzierung der Biofilm-Bildung auf die anti-adhäsive Eigenschaft der erfindungsgemäßen Beschichtung zurückzuführen ist. Aufgrund dieser Eigenschaft können Mineralien, Schmutz und/oder Schlamm nicht so gut auf den Oberflächen der erfindungsgemäßen beschichteten Bauteile ablagern.

Um die Ablagerungen an Oberflächen von Bauteilen oder die mikrobiologische Belastung zu vermeiden, werden dem Nutzwasser in herkömmlichen Kühlanlagen Härtestabilisatoren, Korrosionsinhibitoren, Dispergiermittel, oxidierend-wirkende und/oder nicht oxidierend wirkende Biozide zugesetzt.

Zur Härtestabilisierung werden z. B. folgende Stoffe zugesetzt: anorganische Phosphate, organische Phosphorverbindungen (Phosphonsäuren, Phosphonate), polymere Carboxylate und deren Derivate, Säuren (z.B. zur Absenkung der Säurekonstante bei pH 4,3).

Zur Bildung schützender Deckschichten und damit als Korrosionsschutz von metallischen Werkstoffen können dem Nutzwasser folgende Stoffgruppen oder deren Mischungen als Korrosionsinhibitoren zugesetzt werden: anorganische und organische Phosphorverbindungen, Metallionen enthaltende Inhibitoren (Zinkverbindungen, Molybdat), spezielle synthetische Inhibitoren (z. B. Azolderivate, Benzoat), Silikate.

Zur Begrenzung mikobiologischer Belastung können dem Nutzwasser oxidierende Biozide wie z.B. anorganische Chlor- und Bromverbindungen, organische Chlor- und Bromverbindungen (Halogenabspalter wie Bromchlordimethyl-hydantoin (BCDMH), Monochloramin, Chlorphenol, Di-Chlorisocyanurat), Chlordioxid, Wasserstoffperoxid, Peressigsäure oder Ozon und/oder nicht oxidierende Biozide wie z.B. quaternäre Ammoniumsalze, Glutardialdehyd, organische Schwefelverbindungen (Isothiazolinone, Tetrakis(hydroximethyl)phosphoniumsulfat (THPS)), Organobromverbindungen oder Organochlorverbindungen zugesetzt werden.

Um die Wirkung von Bioziden zu unterstützen, können oberflächenaktive Substanzen wie Tenside zum Einsatz kommen.

Neben der chemischen Beständigkeit gegenüber diesen teilweisen doch aggressiven Zusatzstoffen im Nutzwasser konnte festgestellt werden, dass sich die härtbare Zusammensetzung zur Beschichtung der Bauteile zusätzlich zu einer Reduzierung der Biofilm-Bildung eignete. Es zeigten sich keine nennenswerten negativen Einflüsse vor allem durch oxidative Biozide auf die Beschichtung. Dieser Aspekt war dahingehend überraschend, da in der EP 3 461 864 keinerlei Hinweise offenbart wurden, dass die aus der härtbaren Zusammensetzung hergestellten Beschichtung beständig gegenüber Bioziden ist.

Die Reduzierung der Biofilm-Bildung hat zudem auch den Vorteil, dass die Vermehrung von Krankheitserregern, wie etwa Legionellen, verringert wird. Legionellen sind nicht in der Lage selbst die essentielle Aminosäure Cystein herzustellen und kommen damit in der Umwelt niemals als Reinkultur vor, sondern immer im Biofilm in Vergesellschaftung mit anderen Mikroorganismen. Darüber hinaus haben Legionellen eine im Vergleich zu anderen humanpathogenen Keimen eine lange Generationszeit, so dass davon auszugehen ist, dass das z.T. massenhafte Auftreten von Legionellen im Nutzwasser nur auf die abgelösten Bakterien im Biofilm zurückzuführen ist. Mit der Verringerung der Biofilmbildung verringert sich also auch das Risiko der Einnistung und Vermehrung von Legionellen im Biofilm. Damit reduziert sich ebenfalls der Eintrag von Legionellen in das Nutzwasser und damit letztendlich auch die Freilassung von Legionellen in Aerosolen. Es sei hier anzumerken, dass mit der erfindungsgemäßen Zusammensetzung hergestellte Beschichtungen keine biozide Wirkung festgestellt wurde.

Eine weitere wichtige Größe für den Betrieb von Verdunstungskühlanlagen, Kühltürmen und/oder Nassabscheidern ist auch die Verweildauer des Nutzwassers auf sogenannten Füllkörpern, die den intensiven Kontakt zwischen Wasser und Luft sicherstellen.

Bei den Füllkörpern unterscheidet man zwischen wasserfilmbildenden Einbauten und wassertropfenbildenden Einbauten.

Wasserfilmbildende Einbauten bestehen meist aus geprägten Kunststofffolien aus Polypropylen oder PVC, die zu Paketen zusammengeklebt oder -geschweißt werden. Durch die Prägung der Folien wird für den Wärme- und Stoffaustausch eine große Fläche zur Verfügung gestellt, während die Luft, durch die sich bildenden Kanäle im Gegen- oder Kreuzstrom geführt wird. Mit Folieneinbauten lässt sich eine hohe Leistungsdichte erzielen.

Wassertropfenbildende Einbauten, z. B. Rieselgitter oder Tropfroste, sind in verschiedenen geometrischen Anordnungen und Werkstoffen zu finden. Auch hier wird Luft in Gegenstrom- oder Kreuzstromanordnung geführt.

Die Kühlwirkung von Verdunstungskühlanlagen, Kühltürmen und/oder Nassabscheidern ist daher abhängig von der Verweildauer des warmen Nutzwassers auf den Einbauten. Somit kann der Kühleffekt durch die Verdunstung des Nutzwassers noch besser ausgeschöpft werden.

Durch die Beschichtung mit der erfindungsgemäßen Zusammensetzung konnte völlig unerwartet festgestellt werden, dass das Nutzwasser auf den Füllkörpern länger verweilt. Es lässt daher den Umkehrschluss zu, dass durch die mit der erfindungsgemäßen härtbaren Zusammensetzung hergestellte Beschichtung von solchen Einbauten das Retentionsvermögen erhöht wird, im Vergleich zu Einbauten, die nicht mit der härtbaren Zusammensetzung beschichtet wurden.

Es wird angenommen, dass, je länger das Nutzwasser auf den Füllkörpern verweilen kann, desto intensiver der Kontakt zwischen Wasser und Luft ist und entsprechend der Kühleffekt verbessert werden kann.

Nachfolgend wird eine bevorzugte härtbare Zusammensetzung näher spezifiziert, die für die erfindungsgemäße Verwendung eingesetzt werden kann.

Vorzugsweise weist der silylgruppentragende Polyether verschiedene Wiederholungseinheiten auf, die durch Umsetzung mit einem oder mehreren Alkylenoxiden, Glycidether, Kohlendioxid, cyclischen Anhydriden, Isocyanaten, Caprolactonen oder cyclischen Carbonaten oder Mischungen davon hergestellt werden.

Vorteilhaft weist der silylgruppentragende Polyether eine oder mehrere endständige und/oder eine oder mehrere seitenständige Alkoxysilylreste auf

Vorzugsweise handelt es sich bei Komponente B um silylgruppentragende Polyether gemäß Formel (I): 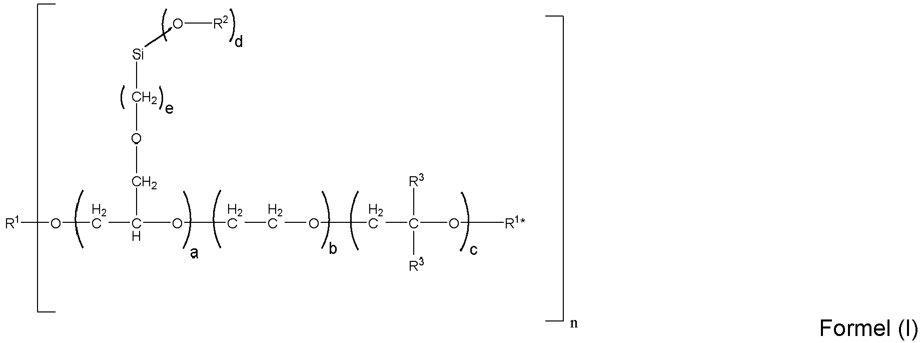 mit
- a: = 1 bis 10, besonders bevorzugt 2 bis 5,
- b: = 1 bis 500, bevorzugt 1 bis 400, besonders bevorzugt 1 bis 300,
- c: = 1 bis 400, besonders bevorzugt 1 bis 300,
- d: = 1 bis 3, bevorzugt 3,
- e: = 1 bis 10, bevorzugt 1 bis 6, besonders bevorzugt 1 bis 3,
mit der Maßgabe, dass die Fragmente mit den Indices a, b und c frei permutierbar über die Molekülkette verteilt sind und dass die Summe von a, b und c > als 3 sind,
und wobei
R¹ = ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1 - 20 Kohlenstoffatome,
R^{1*} = Wasserstoff, ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1 - 20 Kohlenstoffatome,
R² = unabhängig voneinander eine Alkylgruppe mit 1 bis 8 Kohlenstoffatomen, bevorzugt 1 bis 5 Kohlenstoffatome,
R³ = unabhängig voneinander ein Wasserstoffradikal oder eine lineare, verzweigte oder cyclische Alkyl- bzw. Chloralkylgruppe mit 1 bis 20 Kohlenstoffatomen, eine Aryl- oder Alkarylgruppe,
aufweist,
und/oder um Umsetzungsprodukte eines silylgruppentragenden Polyethers gemäß der Formel (I) mit einer oder mehreren isocyanathaltigen Verbindungen, wobei R^{1*} bevorzugt ein Wasserstoff ist.

Bevorzugt ist das Polysiloxan ein lineares, einfach oder mehrfach verzweigtes Si-OH- oder Si(OR)₃- funktionelles Polysiloxan.

Vorzugsweise ist das Polysiloxan ein Alkoxypolysiloxan.

Bevorzugt kann Komponente D auch ein Polysiloxan mit mindestens einer Epoxyfunktionalität und/oder einer Alkoxyfunktionalität enthalten.

Bevorzugt weist Komponente D ein stöchiometrisches Verhältnis von Epoxyfunktion zu Aminofunktion im Bereich von 5 : 0,1 bis 0,1 : 5, bevorzugt von 1 : 1,5, besonders bevorzugt von 1 : 1 auf.

Vorzugsweise handelt es sich bei der epoxyfunktionellen Verbindung um epoxyfunktionelle Silane oder epoxyfunktionelle Siloxane oder um aromatische oder aliphatische Glycidylether oder deren Kondensate oder Mischungen daraus.

Vorzugsweise handelt es sich bei der aminofunktionellen Verbindung um ein aminofunktionelles Alkoxysilan, bevorzugt ein aminofunktionelles Di- oder Trialkoxysilan.

Bevorzugt weist die Zusammensetzung mindestens einen Vernetzer gemäß der Formel (II)

R⁴_{f}Si(OR⁵)_{g} Formel (II)

mit der Maßgabe 0 ≤ f ≤ 2, 0 ≤ g ≤ 4 und f + g = 4,
R⁴ = unabhängig voneinander eine Alkylgruppe oder Cycloalkylgruppe mit 1 bis 8 Kohlenstoffatomen oder eine aromatische Gruppe mit 6 bis 20 Kohlenstoffatomen,
R⁵ = unabhängig voneinander eine Alkylgruppe mit 1 bis 8 Kohlenstoffatomen, bevorzugt eine Methyl-, Ethyl-, Propyl- oder Isopropylgruppe, auf.

Vorzugsweise ist der Katalysator ausgewählt aus der Gruppe der den Hydrolyse-Kondensationsmechanismusfördernden Katalysatoren wie Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder verzweigte oder zyklische Amidine, Guanidine oder Amine oder eine Mischung daraus.

Des Weiteren kann die härtbare Zusammensetzung weitere Zusatzstoffe ausgewählt aus der Gruppe der Weichmacher, Füllstoffe, Pigmente, Haftvermittler, Rheologieadditive, Stabilisatoren, Katalysatoren, Lösungsmittel und Trocknungsmittel, insbesondere chemische Feuchtigkeitstrocknungsmittel, in der Zusammensetzung enthalten sein.

Für die erfindungsgemäße Verwendung weist vorzugsweise die Zusammensetzung
- 1 Gew.-% bis 85 Gew.-%, bevorzugt 5 Gew.-% bis 75 Gew.-% Komponente A,
- 1 Gew.-% bis 50 Gew.-%, bevorzugt 10 Gew.-% bis 40 Gew.-% Komponente B,
- 0,01 Gew.-% bis 5 Gew.-%, bevorzugt 0,05 Gew.-% bis 3 Gew.-% Komponente C
auf, mit der Maßgabe, dass sich die Mengenangaben der Komponente A, B und C auf 100 Gew.-% ergänzen, wobei bezogen auf diese Mengenangabe von 100 Gew.-% aus Komponente A, B und C, die Zusammensetzung
- 0,1 Gew.-% bis 40 Gew.-%, bevorzugt 10,0 Gew.-% bis 35 Gew.-% Komponente D aufweist.

Vorzugsweise setzt sich die Komponente D zusammen aus 5 Gew.-% bis 95 Gew.-%, bevorzugt 10 Gew.-% bis 80 Gew.-%, besonders bevorzugt aus 20 Gew.-% bis 60 Gew.-% der epoxyfunktionellen Verbindung und aus 0,1 Gew.-% bis 50 Gew.-%, bevorzugt 5 Gew.-% bis 40 Gew.-%, der aminofunktionellen Verbindung bezogen auf die Zusammensetzung von Komponente D.

Werden in der vorliegenden Erfindung chemische (Summen-)Formeln verwendet, so können die angegebenen Indizes sowohl absolute Zahlen als auch Mittelwerte darstellen.

Bei polymeren Verbindungen stellen die Indizes vorzugsweise Mittelwerte dar.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Zur Herstellung der härtbaren Zusammensetzung wird auf die EP 3 461 864, bevorzugt Beispiel 1 verwiesen.

Das auf den Bauteilen aufgebrachte Zusammensetzung härtet unter Zutritt von Luftfeuchtigkeit durch eine katalysierte Hydrolyse-Kondensation-Vernetzung aus. Eine kombinierte forcierte Trocknung bei erhöhter Temperatur und gleichzeitig stattfindender chemischer Vernetzung durch Hydrolyse-Kondensation unter Einbringen von genügend Feuchtigkeit in den Ofen schließen sich dabei nicht gegenseitig aus und hängt maßgeblich von dem zu beschichtenden Substrat ab.

Vorzugsweise wird die härtbare Zusammensetzung als Hydratisierungsadditiv bzw. -beschichtung für Bauteile von Verdunstungskühlanlagen, Kühltürmen und/oder Nassabscheidern verwendet.

Bevorzugt bringt man die härtbare Zusammensetzung in Form einer Spritzbeschichtung, Rollen- oder Pinselapplikation, Vorhangbeschichtung, Tauchbeschichtung oder Rakelapplikation auf die Bauteile von Verdunstungskühlanlagen, Kühltürmen und/oder Nassabscheidern auf.

Es ist auch vorteilhaft, die zu beschichtenden Oberfläche der Bauteile verschiedene Vorbehandlungen zu unterziehen. Aus dem Stand der Technik können Oberflächen in vielfältiger Art vorbehandelt werden.

Es sei hier nur einige zu nennen:
Metalloberflächen werden üblicherweise mit einem Korrosionsschutz versehen. Hierfür kommen sogenannte Grundierungen oder Primer zum Einsatz, z.B. Zinkstaubprimer, Korrosionsschutzprimer.

Um die Haftung zwischen Untergrund und wirksamer Decklackschicht sicherzustellen können beispielsweise Grundierungen oder Primer eingesetzt werden, z.B. Epoxyprimer, Vinylprimer oder es werden sogenannte Tiecoats aufgetragen, die z.B. auf Silikon- oder Silikonharzbindemitteln basieren. Zur Verbesserung der Haftung können außerdem dünnschichtige Verfahren angewendet werden. Hier können z.B. die Vorbehandlung mit Silanen und Lösungsmitteln, die Fluorierung, Flammbehandlung, Koronabehandlung, Plasmabehandlung und Elektronenstrahlbehandlung genannt werden.

Bevorzugt wird die Zusammensetzung in einer Menge von 0,1 g bis 1000 g pro m², bevorzugt 0,1 g bis 500 g pro m², besonders bevorzugt 10 g bis 300 g pro m² der zu beschichtenden Fläche der Bauteile und pro Arbeitsgang eingesetzt.

Bevorzugt handelt es sich bei den Bauteilen um, Wärmeübertrager, Füllkörper, Sprühdüsen, Tropfenabscheider, Rohrleitungen und Kühlturmtassen.

Gegenstand der Erfindung ist somit auch die Verwendung der härtbaren Zusammensetzung, wie in den Ansprüchen dargestellt, zur Verbesserung der Nutzwasserretention und zur Reduzierung der Biofilmbildung von Bauteilen in Verdunstungskühlanlagen, Kühltürmen und/oder Nassabscheidern.

Ein weiterer Gegenstand der Erfindung sind Bauteile von Verdunstungskühlanlagen, Kühltürmen und/oder Nassabscheidern, die mit der härtbaren Zusammensetzung beschichtet sind.

Die erfindungsgemäßen Gegenstände werden nachfolgend beispielhaft beschrieben, ohne dass die Erfindung auf diese beispielhaften Ausführungsformen beschränkt sein soll.

### Methoden:

### Applikation

Die Applikation der Bindemittelzusammensetzung findet im Allgemeinen durch Spritzapplikation statt, kann aber auch durch andere Applikationstechniken wie z. B. Rakeln, Streichen, Rollen, Fluten, Tauchen, Gießen aufgetragen werden. Als Substrate eignen sich metallische Untergründe wie z. B. Stahl, Stahlguss, Edelstahl, Aluminium, Aluminiumguss oder feuerverzinkter Stahl. Für eine bessere Haftung kann das Substrat durch Sandstrahlen oder Anschleifen angeraut werden. Auch nichtmetallische Substrate wie Glas, Kunststoffe oder anorganische Substrate wie Keramiken, Steinzeug, Beton etc. können zum Einsatz kommen.

Die auf das Substrat aufgebrachte erfindungsgemäße Bindemittelzusammensetzung härtet dann unter Zutritt von Luftfeuchtigkeit durch eine katalysierte Hydrolyse-Kondensation-Vernetzung aus. Eine kombinierte forcierte Trocknung bei erhöhter Temperatur und gleichzeitig stattfindender chemische Vernetzung durch Hydrolyse-Kondensation unter Einbringen von genügend Feuchtigkeit in den Ofen schließen sich dabei nicht gegenseitig aus.

Ein weiterer Vorteil von Hydrolyse-Kondensations-Beschichtungssystemen, die mit einem Katalysator versetzt sind, ist, dass diese bei geschlossenen Gebinden keiner Topfzeitproblematik unterliegen, da die Aushärtung erst bei Anwesenheit von Wasser aus der umgebenden Luftfeuchtigkeit stattfindet. Im Gegensatz zu den konventionellen, rein physikalisch trocknenden z.B. silikonharzbasierten Beschichtungssystemen, die zum Erreichen der vollen mechanischen und chemischen Beständigkeit erst mindestens für 30 min bei 250 °C Objekttemperatur eingebrannt werden müssen, kann die Energie für die Ofentrocknung hier vollständig eingespart werden.

Das Aussehen der Beschichtung wurde beurteilt. Die Oberfläche soll einen geschlossenen, homogenen Film bilden. Etwaige Lackfehler, wie Krater, Nadelstiche, Kantenflucht oder ähnliches sind aufzulisten. Die Oberflächengüte wird ebenfalls visuell beurteilt. Dabei begutachtet man die Rauigkeit des Lackfilms.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### 1. Herstellung der Zusammensetzung und Applikation

### 1.1 Herstellung der härtbaren Zusammensetzung

**Tabelle 1: Verwendete Materialien für die härtbare Zusammensetzung gemäß EP 3 461 864**

| | | **Typ und Firma** | | | |
|---|---|---|---|---|---|
| **Komponente A** | | | **Phenyl-Methyl-Verhältnis (Ph:Me)** | **Methoxy-Wert (Gew.-%)** | **Molekulargewicht (Mw = kg/mol)** |
| A3 | Polysiloxan | 3074 Intermediate, Fa. Dow Corning | 1:1 | 15-18 | -1.3 |

| **Komponente B** | | | | | |
|---|---|---|---|---|---|
| B3 | | Herstellung von B3 gemäß EP 3 461 864 | | | |
| | | | | | |
| **Komponente C** | Katalysator | TibKat 318 (DBTL), Fa. TIB Mannheim mit CAS-Nr. 68299-15-0 | | | |

| **Komponente D,** analog der Tabelle 2 der EP 3 461 864 | | | | | |
|---|---|---|---|---|---|
| D1 | a,w-epoxypropoxypropyl-funktionelles Polydimethylsiloxan | DMS-E12, CAS-Nr. 102782-97-8, Gelest | | | |
| D2 | Epoxidharz | Eponex Resin 1510, Hexion | | | |
| D3 | Aminopropyltrieethoxysilan | Dynasylan AMEO, CAS-Nr. 919-30-2, Evonik | | | |

**Tabelle 2**

| | | **VZ22** | **Z8** | **VZ25** | **Z9** |
|---|---|---|---|---|---|
| **Komponente A** | A3 | 70 | 70 | 70 | 70 |
| **Komponente B** | B3 | | 30 | | 30 |
| **Komponente C** | Katalysator* | 2 | 2 | 2 | 2 |
| **Komponente D** | D1 | 30 | 30 | | |
| | D2 | | | 30 | 30 |
| | D3** | 1:0,95 | 1:0,95 | 1:0,95 | 1:0,95 |

| | | | | | |
|---|---|---|---|---|---|
| Die Zahlenangaben sind als Gewichtsteile angegeben, wobei *Komponente C in Gew.-% bezogen auf Gesamtzusammensetzung angegeben wird und **die Menge von Komponente D3 mittels des Verhältnisses von D1 bzw. D2 entsprechend dem angegebenen Mol-Verhältnis errechnet wird. | | | | | |

Die Herstellung der härtbaren Zusammensetzung Z8 und Z9 sowie Vergleichszusammensetzung VZ22 und VZ25 gemäß den Angaben aus Tabelle 2 wird gemäß EP 3 461 864, Beispiel 1, durchgeführt.

Nach kurzer Ruhezeit von 5 Minuten wurden die erfindungsgemäßen Zusammensetzungen sowie Vergleichszusammensetzungen zur Beurteilung der Filmeigenschaften mittels 300 µm Kasten-Rakel (300µm - Kastenrakel, Fa. Simex) bei RT auf mit Isopropanol gereinigten Glasplatten (Fa. Gläserei Glänzer, Maße: 90 x 150x 5mm) aufgezogen und bei RT getrocknet; zur Bestimmung der Trockenzeit wurden sie auf Standardglasstreifen (30 x 2,5 cm x 2 mm) mittels einer Kastenrakel (Fa. Erichsen Model 360, Nassfilmschichtdicke 100 µm) aufgetragen. Darüber hinaus wurden mittels Sprühapplikation PVC Panels (PVC - Platten, 200x400x5mm, Art.Nr:4364002858, KVG Kunststoff Betriebs GmbH) beschichtet, die zuvor mit einem handelsüblichen Primer (Sika Poxicolor Primer HE NEU) zur besseren Adhäsion vorbehandelt wurden. Die Trocknung erfolgte abschließend für 24 Stunden in dafür vorgesehenen Trockenschränken bei RT.

Alle Proben zeigten eine gute bis sehr gute visuelle Filmeigenschaft auf, wie in Tabelle 7 der EP 3 461 864 aufgeführt.

### 1.2 Herstellung pigmentierter Formulierungen aus den härtbaren Zusammensetzungen

Die pigmentierten Formulierungen gemäß Tabelle 3 wurden mittels eines Dispermaten des Typs CN-40F2 der Firma VMA Getzmann unter Verwendung eines doppelwandigen 1L Stahl-Mahltopf der Firma Getzmann hergestellt. Es wurde eine Teflonscheibe mit dem Durchmesser von 50 mm benutzt. Die härtbaren Zusammensetzungen und das Lösungsmittel wurden eingewogen und verrührt. Es wurden Glasperlen mit dem Durchmesser von 2,4 - 2,9 mm zugegeben. Anschließend wurden Pigmente und Füllstoffe dazu gewogen und bei einer Umdrehungszahl von 21 m/s 15 Minuten vordispergiert. Dabei soll die Temperatur 60 °C nicht überschreiten. Weiteres Lösungsmittel wurde hinzugefügt und die Hauptdispergierung bei 25 m/s über 30 min durchgeführt. Dabei soll die Temperatur 60 °C nicht überschreiten. Zuletzt wurde Butyldiglykol als Verlaufshilfsmittel zugegeben.

**Tabelle 3**

| **Rohstoff** | **Funktion** | **Hersteller** | **PL-VZ22** | **PL-Z8** | **PL-VZ25** | **PL-Z9** |
|---|---|---|---|---|---|---|
| Bindemittel VZ22 | Bindemittel | | 50,00 | | | |
| Bindemittel Z8 | Bindemittel | | | 50 | | |
| Bindemittel VZ25 | Bindemittel | | | | 50 | |
| Bindemittel Z9 | Bindemittel | | | | | 50 |
| TEGO^{®} Dispers 670 | Dispergieradditiv | Evonik Industries | 5,00 | 5,00 | 5,00 | 5,00 |
| TEGO^{®} Foamex 810 | Entschäumer | Evonik Industries | 1,00 | 1,00 | 1,00 | 1,00 |
| Solvesso 100 | Lösungsmittel | ExxonMobil | 4,00 | 4,00 | 4,00 | 4,00 |

| **Vorlegen und Verrühren** | | | | | | |
|---|---|---|---|---|---|---|
| AEROSIL^{®} 200 | Verdicker | Evonik Industries | 2,00 | 2,00 | 2,00 | 2,00 |
| FINNTALC M15 | Füllstoff | Elementis | 10,00 | 10,00 | 10,00 | 10,00 |
| BAYFERROX^{®} 130M | Pigment | LANXESS | 5,00 | 5,00 | 5,00 | 5,00 |
| Kronos 2310 | Pigment | Kronos International | 7,00 | 7,00 | 7,00 | 7,00 |
| BLANC FIXE micro | Füllstoff | Solvay | 6,00 | 6,00 | 6,00 | 6,00 |

| **Vordispergierung** | | | | | | |
|---|---|---|---|---|---|---|
| Xylol | Lösungsmittel | Diverse | 8,00 | 8,00 | 8,00 | 8,00 |

| **Hauptdispergierung** | | | | | | |
|---|---|---|---|---|---|---|
| Butyldiglycol | Verlaufshilfsmittel | Diverse | 2,00 | 2,00 | 2,00 | 2,00 |
| **Total** | | | **100,00** | **100,00** | **100,00** | **100,00** |
| D3 | | | 1:0,95 | 1:0,95 | 1:0,95 | 1:0,95 |

### 1.2.1 Applikation pigmentierter und unpigmentierter härtbarer Zusammensetzungen

Zur Applikation, der unter 1.2 hergestellte Formulierungen, wurden folgende Methoden verwendet:
Tauchapplikation zur beidseitigen Beschichtung kleiner PVC oder Metallcoupons (2,5 cm x 7,5 cm) für den Bioassay, wie unten beschrieben, und die Auslagerungen im Kühlturm

### 2. Bioassay

Zur Prüfung der härtbaren Zusammensetzungen hinsichtlich deren Wirksamkeit zur Verhinderung bzw. zumindest zur Reduzierung von Biofilmen unter Laborbedingungen wurden die Beschichtungen VZ22, Z8, VZ25, Z9 sowie PL-VZ22, PL-Z8, PL-VZ-25 und PL-Z9 auf 2,5 cm x 7,5 cm PVC-Coupons , analog wie oben beschrieben, appliziert.

Als Referenzorganismen für die Bakteriensuspension wurden Trinkwasserbakterien verwendet.

### • Herstellung der Bakteriensuspension-Stammlösung

Es handelte sich um die autochthone Mikroflora, die sich aus dem Trinkwasser unter Zugabe von Casein Sojamehl Pepton (CASO)-Bouillon (30 g / l steriles Trinkwasser, Fa. Merck KGaA Millipore) innerhalb von 16 ± 1 Stunden bei 30 °C bildete. Der Gesamtzelltiter dieser Bakteriensuspension-Stammlösung wurde mit Hilfe einer Zählkammer (Thoma-neu, Fa. Lo-Laboroptik Ltd) mikroskopisch bestimmt.

### • Herstellung der Bakteriensuspension-Arbeitslösung

Die Bakteriensuspension-Stammlösung wurde derart verdünnt, dass in 1,8 L 1:10 verdünnte CASO-Bouillon (1,5 g / l steriles Trinkwasser) eine Zellzahl von 5 x 10⁶ Zellen/ ml enthalten war.

### 2.1 Bestimmung der Wirksamkeit der erfindungsgemäßen Beschichtung zur Reduzierung von Biofilmbildung unter Laborbedingungen

Die derart hergestellte Bakteriensuspension-Arbeitslösung wurde in ein 2 L Becherglas gefüllt, das je 12 beschichtete PVC-Coupons (VZ22, Z8, VZ25, Z9, PL-VZ22, PL-Z8, PL-VZ25, PL-Z9) senkrecht durch einen Stahlring mit Klemmen fixiert enthielt. In der Mitte befand sich ein Magnetrührstab, der die Bakteriensuspension-Arbeitslösung durchmischte. Das Becherglas stand auf einer Magnetheizplatte, die so eingestellt war, dass die Bakteriensuspension-Arbeitslösung eine Temperatur von 30 °C aufwies.

Die beschichteten Glas-Objektträger wurden nach 7 Tagen entnommen. Die beschichteten PVC-Coupons wurden anschließend hinsichtlich ihrer Biofilmbildung untersucht. Die visuelle Bewertung erfolgte im Rasterelektronenmikroskop (TabletopTM4000Plus, Hitachi Ltd).

Als Kontrollreferenz wurden unbeschichtete PVC Coupons eingesetzt. Alle Proben und Referenzen wurden in Triplikat geprüft.

Die Gesamtbewertung erfolgte visuell mittels einer wie folgt dargestellten Skala von
0 = kein Biofilm; Herleitung → sehr gute anti-adhäsive Eigenschaften
1 = minimaler Biofilm; Herleitung → sehr gute anti-adhäsive Eigenschaften
2 = leichter Biofilm; Herleitung → gute anti-adhäsive Eigenschaften
3 = mittelstarker Biofilm; Herleitung → moderate anti-adhäsive Eigenschaften
4 = starker Biofilm; Herleitung → schlechte anti-adhäsive Eigenschaften

Die visuelle Bewertung der Proben hinsichtlich der Biofilmbildung wurde mikroskopisch durchgeführt und in Tabelle 5 beschrieben.

**Tabelle 5: Visuelle Beurteilung der Biofilmbildung unter Laborbedingung**

| **Beschichtung** | **Beurteilung** |
|---|---|
| VZ22 | 4 |
| Z8 | 1 |
| VZ25 | 4 |
| Z9 | 3 |
| PL-VZ22 | 4 |
| PL-Z8 | 2 |
| PL-VZ25 | 4 |
| PL-Z9 | 3 |
| Kontroll referenz | 4 |

Alle erfindungsgemäßen Zusammensetzungen weisen durchgehend eine geringere Biofilmbildung auf als die entsprechenden Vergleichsbeispiele. Es lässt daher auch die Schlussfolgerung zu, dass die anti-adhäsive Eigenschaft der erfindungsgemäßen Beschichtungen besser ist als die der Vergleichsbeispiele.

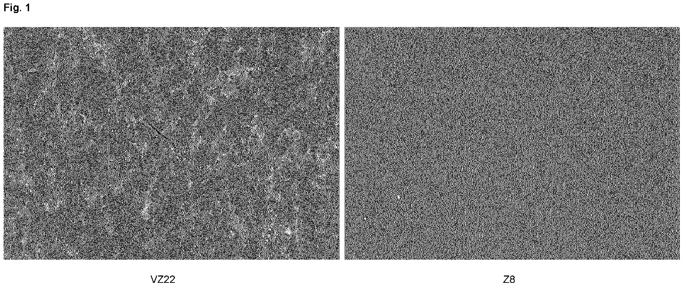

Fig. 1 zeigt beispielsweise eine micrographische Darstellung von rasterelektronenmikroskopischen Aufnahmen der VZ22 und Z8. Der Biofilm von VZ22 ist deutlich zu erkennen. Z8 weist keinen Biofilm auf.

### 2.2 Bestimmung der Wirksamkeit der erfindungsgemäßen Beschichtung zur Reduzierung von Biofilmbildung in einer Verdunstungskühlanalage

Die beidseitig mit der jeweiligen härtbaren Zusammensetzung beschichteten PVC-Coupons VZ22, Z8, VZ25, Z9 sowie PL-VZ22, PL-Z8, PL-VZ-25 und PL-Z9 wurden in dem Füllkörper einer Verdunstungskühlanlage für insgesamt 12 Wochen ausgelagert.

Als Kontrollreferenz wurden unbeschichtete PVC Coupons ebenfalls für insgesamt 12 Wochen in der Verdunstungskühlanlage ausgelagert. Die Proben in Triplikat wurden nach 12 Wochen entnommen und auf die Biofilmbildung überprüft. Die visuelle Bewertung erfolgte im Rasterelektronenmikroskop (TabletopTM4000Plus, Hitachi Ltd).

Die Gesamtbewertung erfolgte mittels einer wie folgt dargestellten Skala von
0 = kein Biofilm; Herleitung → sehr gute anti-adhäsive Eigenschaften
1 = minimaler Biofilm; Herleitung → sehr gute anti-adhäsive Eigenschaften
2 = leichter Biofilm; Herleitung → gute anti-adhäsive Eigenschaften
3 = mittelstarker Biofilm; Herleitung → moderate anti-adhäsive Eigenschaften
4 = starker Biofilm; Herleitung → schlechte anti-adhäsive Eigenschaften

**Tabelle 6: Visuelle Beurteilung der Biofilmbildung in einer Verdunstungskühlanlage**

| **Beschichtung** | **Beurteilung** |
|---|---|
| VZ22 | 4 |
| Z8 | 2 |
| VZ25 | 4 |
| Z9 | 3 |
| PL-VZ22 | 4 |
| PL-Z8 | 3 |
| PL-VZ25 | 4 |
| PL-Z9 | 3 |
| Kontroll referenz | 4 |

Auch unter realen Bedingungen weisen die erfindungsgemäßen Beschichtungen kaum einen Biofilm auf. Somit ist die Schlussfolgerung, dass die erfindungsgemäßen Beschichtungen eine bessere anti-adhäsive Eigenschaft haben, gerechtfertigt.

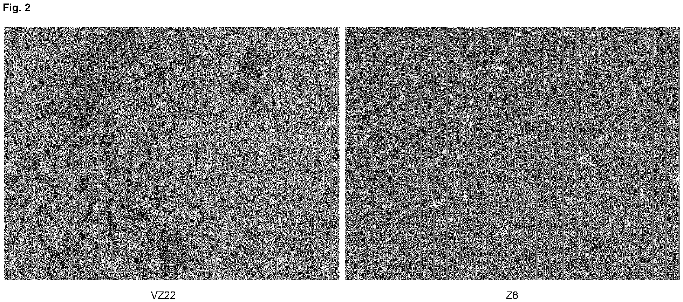

Fig. 2 zeigt beispielsweise eine micrographische Darstellung von rasterelektronenmikroskopischen Aufnahmen der VZ22 und Z8. Der Biofilm von VZ22 ist deutlich zu erkennen. Z8 weist nur sehr wenig Biofilm auf.

### 2.3 Bestimmung von Legionellen

Da die Beschichtungsoberfläche Z8 die beste Performance im Auslagerungsversuch in der Verdunstungskühlanlage zeigte, wurde Z8 hinsichtlich des Vorkommens von *Legionella spec.* im Vergleich zu der Kontrollreferenz (PVC) geprüft.

Die Proben in Triplikat wurden nach 2, 4 und 6 Wochen entnommen und wie folgt untersucht:
Der Aufwuchs auf den Probenoberflächen nach der Austestung in der Verdunstungskühlanlage wurde abgeschabt und auf das Vorkommen von *Legionella spec.* untersucht. Der abgeschabte Aufwuchs wurde nach ISO 11731 :2017 dekadisch verdünnt und auf Glycine Vancomycin Polymyxin Cycloheximide (GVPC) Nähragarplatten ausplattiert. Die Proben wurden 7 Tage bei 36 °C inkubiert. Anschließend wurden die Kolonieformenden Einheiten (KBE) quantifiziert. Das Vorkommen von *Legionella spec.* wurde in KBE/cm² berechnet. Es galt eine Nachweisgrenze von 1 KBE/cm².

Die ermittelten KBE/cm² auf Z8 und der Kontrollreferenz (PVC) sind in Tabelle 7 dargestellt.

**Tabelle 7: Nachweis von Legionella spec.**

| **Beschichtung** | ***Legionella spec.* KBE/cm2** | | |
|---|---|---|---|
| | 2 Wochen | 4 Wochen | 6 Wochen |
| Z8 | n.n. | n.n. | 6,67E+00 |
| Kontroll referenz | n.n. | 6,67E+01 | 1,80E+01 |

Die Analyse des Aufwuchses auf den Probenoberflächen auf das Vorkommen von *Legionella spec.* zeigte, dass weniger Legionellen auf der Beschichtung Z8 gefunden wurden als auf der Kontrollreferenz (PVC). Nach 4 Wochen wurde die Verdunstungskühlanlage aufgrund der Legionellenbelastung auf der Kontrollreferenz desinfiziert. Die letzten Proben verblieben in der Anlage und wurden nach weiteren 2 Wochen entnommen und untersucht. Auch nach insgesamt 6 Wochen zeigte Z8 eine geringere Belastung an *Legionella spec.* als die Kontrollreferenz.

Somit ist ersichtlich, dass die erfindungsgemäße Verwendung keine biozide Wirkung aufweist, da ein leichter Aufwuchs festgestellt werden konnte.

### 3. Prüfung des Retentionsvermögens

Es wurden beschichtete und unbeschichtete Füllkörpereinheiten in der Größe 15 x 20 cm aus PVC in einem 45° Winkel aufgestellt. Mittels einer haushaltsüblichen Wasserspritzflasche mit Sprühkopf wurden drei Stöße Wasser auf den oberen Teil der PVC Prüfkörper gespritzt. Die Zeit bis zum vollständigen Ablauf der Tropfen wurde gemessen.

**Tabelle 7**

| | **Probe** | **Zeit bis zum Ablauf [s = Sekunde]** |
|---|---|---|
| VR | PVC unbeschichtet | 2 s |
| R1 | PVC beschichtet mit Formulierung Z8 | 90 s |
| R2 | PVC beschichtet mit Formulierung Z8 nach 3 h Wasserlagerung | 110 s |

Die beschichteten Füllkörpereinheiten haben eine deutlich höhere Wasserrückhaltewirkung als die unbeschichtete Füllkörpereinheit, sowohl beim Erstkontakt mit Wasser als auch im Verlauf der Anwendung, wenn die Beschichtung ständig angefeuchtet ist.

Aufgrund dieser verbesserten Wasserrückhaltewirkung kann der Kühleffekt noch effizienter ausgenutzt werden.

## Patentansprüche

1. Verwendung von härtbaren Zusammensetzungen enthaltend als
- Komponente A mindestens ein Polysiloxan,
- Komponente B mindestens einen silylgruppentragenden Polyether und/oder Umsetzungsprodukte eines silylgruppentragenden Polyethers mit einer oder mehreren isocyanathaltigen Verbindungen,
- Komponente C mindestens ein Katalysator,
- Komponente D mindestens eine epoxyfunktionelle Verbindung und/oder eine aminofunktionelle Verbindung
in Formulierungen für mit Nutzwasser in Berührung kommenden Bauteilbeschichtungen in Verdunstungskühlanlagen, Kühltürmen und/oder Nassabscheidern.

2. Verwendung nach Anspruch 1, **dadurch gekennzeichnet, dass** der silylgruppentragende Polyether verschiedene Wiederholungseinheiten aufweist, die durch Umsetzung mit einem oder mehreren Alkylenoxiden, Glycidether, Kohlendioxid, cyclischen Anhydriden, Isocyanaten, Caprolactonen oder cyclischen Carbonaten oder Mischungen davon hergestellt werden.

3. Verwendung nach einem der vorgenannten Ansprüche, **dadurch gekennzeichnet, dass** der silylgruppentragende Polyether eine oder mehrere endständige und/oder eine oder mehrere seitenständige Alkoxysilylreste aufweist.

4. Verwendung nach einem der vorgenannten Ansprüche, **dadurch gekennzeichnet, dass** es sich bei Komponente B um silylgruppentragende Polyether gemäß Formel (I): 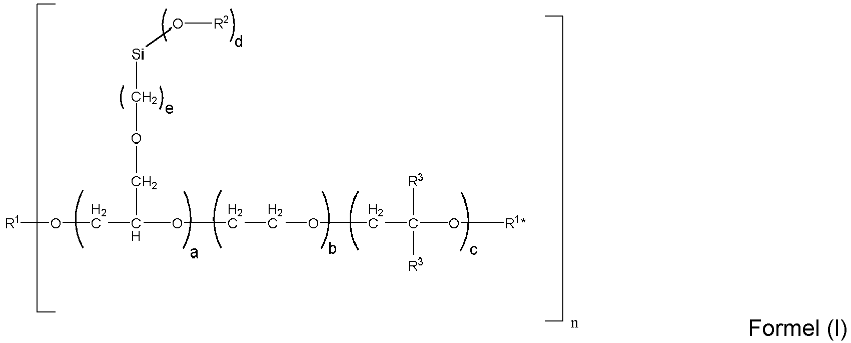 mit
a = 1 bis 10, besonders bevorzugt 2 bis 5,
b = 1 bis 500, bevorzugt 1 bis 400, besonders bevorzugt 1 bis 300,
c = 1 bis 400, besonders bevorzugt 1 bis 300,
d = 1 bis 3, bevorzugt 3,
e = 1 bis 10, bevorzugt 1 bis 6, besonders bevorzugt 1 bis 3,
mit der Maßgabe, dass die Fragmente mit den Indices a, b und c frei permutierbar über die Molekülkette verteilt sind und dass die Summe von a, b und c > als 3 sind,
und wobei
R¹ = ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1 - 20 Kohlenstoffatome,
R^{1*} = Wasserstoff, ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1 - 20 Kohlenstoffatome,
R² = unabhängig voneinander eine Alkylgruppe mit 1 bis 8 Kohlenstoffatomen, bevorzugt 1 bis 5 Kohlenstoffatome,
R³ = unabhängig voneinander ein Wasserstoffradikal oder eine lineare, verzweigte oder cyclische Alkyl- bzw. Chloralkylgruppe mit 1 bis 20 Kohlenstoffatomen, eine Aryl- oder Alkarylgruppe,
aufweist,
und/oder um Umsetzungsprodukte eines silylgruppentragenden Polyethers gemäß der Formel (I) mit einer oder mehreren isocyanathaltigen Verbindungen, wobei R^{1*} bevorzugt ein Wasserstoff ist.

5. Verwendung nach einem der vorgenannten Ansprüche, **dadurch gekennzeichnet, dass** das Polysiloxan ein lineares, einfach oder mehrfach verzweigtes Si-OH- oder Si(OR)₃-funktionelles Polysiloxan ist.

6. Verwendung nach einem der vorgenannten Ansprüche, **dadurch gekennzeichnet, dass** das Polysiloxan ein Alkoxypolysiloxan ist.

7. Verwendung nach einem der vorgenannten Ansprüche, **dadurch gekennzeichnet, dass** Komponente D ein stöchiometrisches Verhältnis von Epoxyfunktion zu Aminofunktion im Bereich von 5 : 0,1 bis 0,1 : 5 liegt, bevorzugt von 1 : 1,5, besonders bevorzugt von 1 : 1 aufweist.

8. Verwendung nach einem der vorgenannten Ansprüche, **dadurch gekennzeichnet, dass** es sich bei der epoxyfunktionellen Verbindung um epoxyfunktionelle Silane oder epoxyfunktionelle Siloxane oder um aromatische oder aliphatische Glycidylether oder deren Kondensate oder Mischungen daraus handelt.

9. Verwendung nach einem der vorgenannten Ansprüche, **dadurch gekennzeichnet, dass** es sich bei der aminofunktionellen Verbindung um ein aminofunktionelles Alkoxysilan, bevorzugt ein aminofunktionelles Di- oder Trialkoxysilan handelt.

10. Verwendung nach einem der vorgenannten Ansprüche, **dadurch gekennzeichnet, dass** die Zusammensetzung mindestens ein Vernetzer aufweist, gemäß der Formel (II)
R⁴_{f}Si(OR⁵)_{g} Formel (II)
mit der Maßgabe 0 ≤ f ≤ 2, 0 ≤ g ≤ 4 und f + g = 4,
R⁴ = unabhängig voneinander eine Alkylgruppe oder Cycloalkylgruppe mit 1 bis 8 Kohlenstoffatomen oder eine aromatische Gruppe mit 6 bis 20 Kohlenstoffatomen,
R⁵ = unabhängig voneinander eine Alkylgruppe mit 1 bis 8 Kohlenstoffatomen, bevorzugt eine Methyl-, Ethyl-, Propyl- oder Isopropylgruppe, auf.

11. Verwendung nach einem der vorgenannten Ansprüche , **dadurch gekennzeichnet, dass** der Katalysator ausgewählt ist aus der Gruppe der den Hydrolyse-Kondensationsmechanismus fördernden Katalysatoren wie Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder verzweigte oder zyklische Amidine, Guanidine oder Amine oder eine Mischung daraus.

12. Verwendung nach einem der vorgenannten Ansprüche, **dadurch gekennzeichnet, dass** weitere Zusatzstoffe ausgewählt aus der Gruppe der Weichmacher, Füllstoffe, Pigmente, Haftvermittler, Rheologieadditive, Stabilisatoren, Katalysatoren, Lösungsmittel und Trocknungsmittel, insbesondere chemische Feuchtigkeitstrocknungsmittel, in der Zusammensetzung enthalten sind.

13. Verwendung nach einem der vorgenannten Ansprüche, **dadurch gekennzeichnet, dass** die Zusammensetzung
- 1 Gew.-% bis 85 Gew.-%, bevorzugt 5 Gew.-% bis 75 Gew.-% Komponente A,
- 1 Gew.-% bis 50 Gew.-%, bevorzugt 10 Gew.-% bis 40 Gew.-% Komponente B,
- 0,01 Gew.-% bis 5 Gew.-%, bevorzugt 0,05 Gew.-% bis 3 Gew.-% Komponente C
auf, mit der Maßgabe, dass sich die Mengenangaben der Komponente A, B und C auf 100 Gew.-% ergänzen, wobei bezogen auf diese Mengenangabe von 100 Gew.-% aus Komponente A, B und C, die Zusammensetzung
- 0,1 Gew.-% bis 40 Gew.-%, bevorzugt 10,0 Gew.-% bis 35 Gew.-% Komponente D
aufweist.

14. Verwendung nach Anspruch 13, **dadurch gekennzeichnet, dass** Komponente D sich zusammensetzt aus 5 Gew.-% bis 95 Gew.-%, bevorzugt 10 Gew.-% bis 80 Gew.-%, besonders bevorzugt aus 20 Gew.-% bis 60 Gew.-% der epoxyfunktionellen Verbindung und aus 0,1 Gew.-% bis 50 Gew.-%, bevorzugt 5 Gew.-% bis 40 Gew.-%, der aminofunktionellen Verbindung bezogen auf die Zusammensetzung von Komponente D.

15. Verwendung nach einem der vorgenannten Ansprüche, **dadurch gekennzeichnet, dass** die Zusammensetzung als Hydratisierungsadditiv bzw. -beschichtung auf die Bauteile von Verdunstungskühlanlagen, Kühltürmen und/oder Nassabscheidern.

16. Verwendung nach einem der vorgenannten Ansprüche, **dadurch gekennzeichnet, dass** man die Zusammensetzung in Form einer Spritzbeschichtung, Rollen- oder Pinselapplikation, Vorhangbeschichtung, Tauchbeschichtung oder Rakelapplikation auf die Bauteile von Verdunstungskühlanlagen, Kühltürmen und/oder Nassabscheidern aufbringt.

17. Verwendung nach einem der vorgenannten Ansprüche, **dadurch gekennzeichnet, dass** die Zusammensetzung in einer Menge von 0,1 g bis 1000 g pro m², bevorzugt 0,1 g bis 500 g pro m², besonders bevorzugt 10 g bis 300 g pro m² der zu beschichtenden Fläche der Bauteile und pro Arbeitsgang eingesetzt werden.

18. Verwendung nach einem der vorgenannten Ansprüche, **dadurch gekennzeichnet, dass** es sich bei den Bauteilen um Mess- und Regelorgane, Filter, Wärmeübertrager, Füllkörper, Sprühdüsen, Tropfenabscheider, Rohrleitungen und Kühlturmtassen handelt.

19. Verwendung nach einem der vorgenannten Ansprüche zur Verbesserung der Nutzwasserretention und zur Reduzierung der Biofilmbildung von Bauteilen in Verdunstungskühlanlagen, Kühltürmen und/oder Nassabscheidern.

20. Bauteile von Verdunstungskühlanlagen, Kühltürmen und/oder Nassabscheidern **dadurch gekennzeichnet, dass** diese mit der härtbaren Zusammensetzung nach einem der vorgenannten Ansprüche beschichtet sind.
